# EUROPEAN PATENT APPLICATION

(11) **EP 0 534 798 A2**
(43) Date of publication of application: **31.03.1993**
(21) Application number: 92308809.0
(22) Date of filing: 28.09.1992
(51) Int. Cl.: G11B 15/07, G11B 15/087

(54) **Tape recorder**

(30) Priority: 27.09.1991 JP 248846/91
(71) Applicant: MATSUSHITA ELECTRIC INDUSTRIAL CO., LTD., Kadoma-shi, Osaka-fu, 571 (JP)
(72) Inventor: Kinoshita, Susumu, Katano-shi, Osaka (JP); Yano, Masayoshi, Hirakata-shi, Osaka (JP); Sawada, Naoto, Hirakata-shi, Osaka (JP); Otani, Kenji, Ikoma-shi, Nara-ken (JP)
(74) Representative: Senior, Alan Murray

(57) **Abstract**

A tape recorder for recording/reproducing a signal comprises : a mounting for mounting either of analog or digital tape cassette, the tape cassettes having essentially the same configuration, the tape cassettes being to be recorded/reproduced under analog and digital conditions respectively, either of analog or digital tape cassette having a marking portion to be discriminated from each other; a recording/reproducing circuit for recording/reproducing the signal on or from a magnetic tape of the mounted tape cassette ; a discriminating circuit for producing a discrimination signal in response to the marking portion ; an operation portion having for producing a command signal in response to operation of an operator ; and a control circuit responsive to the command signal and the discrimination signal for causing the recording/reproducing circuit to record/reproduce the signal on or from the magnetic tape in the analog condition when the analog tape cassette is mounted on the mounting portion and for causing the recording/reproducing circuit to record/reproduce the signal on or from the magnetic tape in the digital condition when the digital tape cassette is mounted on the mounting portion.

## Description

This invention relates to a tape recorder for recording/reproducing information compatibly between analog and digital methods.

As digital recording/reproducing tape recorders, rotary head types R-DAT) and fixed head types (S-DAT) are known. There is a tape recorder having a compatible function of recording/reproducing between digital and analog methods. Such a tape recorder has a fixed head for digital recording and digital reproducing and a fixed head for analog recording and analog reproducing. The tape cassettes for digital recording, i.e., digital compact cassette (DCC) has a similar configuration to the tape cassette for analog recording, i.e., analog compact cassette (ACC). Thus, both types of tape cassettes can be mounted on the same tape cassette mounting device of the tape recorder.

However, if functions for driving the ACC and DCC are provided in the same tape recorder, thereare few commonly used portions, due to different recording/reproducing methods, and different operation keys as commanding means have to be provided for the ACC and the DCC respectively.

The present invention has been developed in order to remove the above-described drawbacks inherent in the conventional tape recorder.

According to the present invention there is provided a tape recorder for recording/reproducing a signal comprises: a mounting portion for mounting either of analog or digital tape cassette, these tape cassettes having essentially the same configuration, these tape cassettes being to be recorded/reproduced under analog and digital conditions respectively, either of analog or digital tape cassette having a marking portion to be discriminated from each other; a recording/reproducing circuit for recording/reproducing the signal on or from a magnetic tape of the mounted tape cassette; a discriminating circuit for producing a discrimination signal in response to the marking portion; an operation portion having for producing a command signal in response to operation of an operator; and a control circuit responsive to the command signal and the discrimination signal for causing the recording/reproducing circuit to record/reproduce the signal on or from the magnetic tape in the analog condition when the analog tape cassette is mounted on the mounting portion and for causing the recording/reproducing circuit to record/reproduce the signal on or from the magnetic tape in the digital condition when the digital tape cassette is mounted on the mounting portion.

According to the present invention there is also provided a tape recorder for recording/reproducing a signal as mentioned above, further comprising indication circuit, wherein the control circuit causes the indication circuit to indicate first information when an analog tape cassette is mounted on the mounting portion and second information when a digital tape cassette is mounted on the mounting portion.

The object and features of the present invention will become more readily apparent from the following detailed description, meant by way of example only, taken in conjunction with the accompanying drawings in which:
Fig. 1 is a block diagram of an embodiment of this invention of a tape recorder;
Fig. 2 shows a flow chart of the operation of the embodiment of Fig. 1;
Fig. 3 shows a flow chart of the subroutine of step s5 shown in Fig. 2;
Fig. 4 shows a flow chart of a subroutine of step s8 shown in Fig. 2;
Fig. 5 is a plan view of operation unit 14 shown in Fig. 1;
Fig. 6 shows a track format of the embodiment of Fig.1; and
Fig. 7 shows a frame format of the embodiment of Fig 1.

The same or corresponding elements or parts are designated with like references throughout the drawings.

Hereinbelow will be described an embodiment of this invention of tape recorderfor recording/reproducing a signal on or from a magnetic tape with reference to drawings.

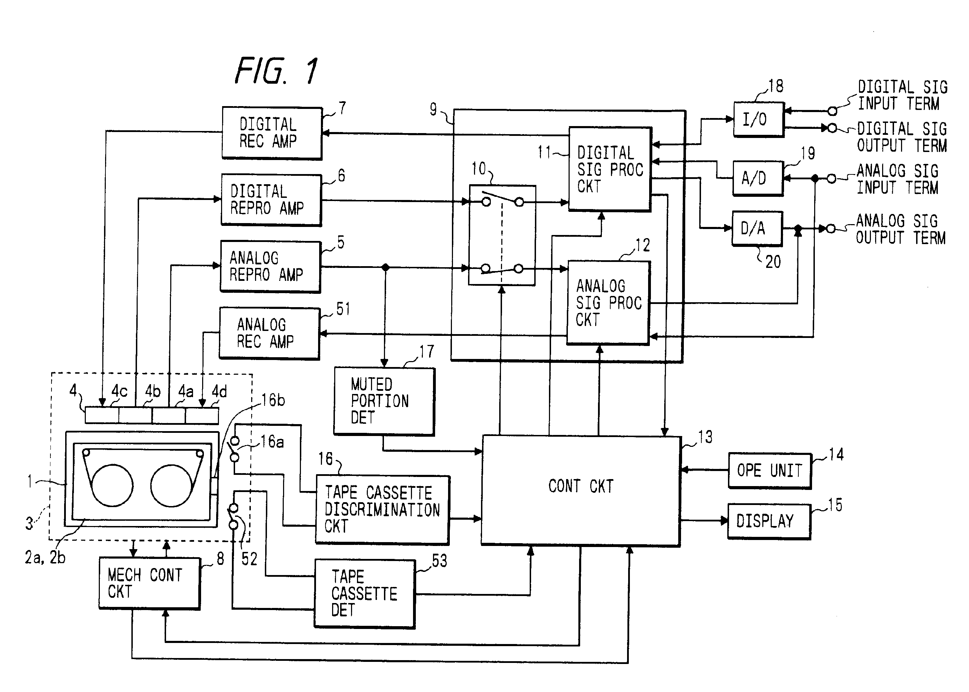

Fig. 1 is a block diagram of the embodiment of this invention of a tape recorder. In Fig. 1, numeral 1 denotes a tape cassette mounting device for mounting either of an analog type tape cassette 2a or a digital type tape cassette 2b. In other words, both types of tape cassettes fit to the tape cassette mounting device 1 because these tape cassettes 2a and 2b have substantially the same configuration. Numeral 3 denotes a drive mechanism for driving a digital or an analog type tape cassette mounted on the tape cassette mounting device 1 to travel the magnetic tape of the analog tape cassette 2a or the digital tape cassette 2b for reproducing, recording, fast-forwarding, rewinding and the like. Numeral 4 denotes a record/reproduce head unit for recording a signal on a magnetic tape of an analog or digital type tape cassette 2a or 2b driven by the drive mechanism 3 and for reproducing a recorded signal on the magnetic tape. The record/reproduce head unit4 comprises an analog reproducing head 4a, a digital reproducing head 4b, a digital recording head 4c, and an analog recording head 4d. These heads 4a to 4d are arranged along a traveling path of the magnetic tape of analog and digital tape cassettes 2a and 2b. Numeral 5 is an analog reproducing ampiifierfor amplifying the reproduced signal from the magnetic tape of an analog type tape cassette 2a. Numeral 6 is a digital reproducing amplifier for amplifying a reproduced signal from a digital tape cassette 2b by the digital reproducing head 4b. Numeral 7 is a digital recording amplifier for recording a digital signal through the digital recording head 4c. Numeral 51 is an analog recording amplifier used for recording an analog signal through the analog recording head 4d. That is, the analog reproducing head 4a reproduces an analog signal from the magnetic tape of the analog tape cassette 2a which is sent to the analog tape reproducing amplifier 51. The digital reproducing head 4b reproduces a digital signal from the magnetic tape of the digital tape cassette 2b, which is sent to the digital tape reproducing amplifier 6. The digital recording head 4c records a digital signal from the digital recording amplifier 7.

Numeral 13 is a control circuit comprising a microprocessor for controlling the following elements by producing control signals.

Numeral 8 is a mechanism control circuit for controlling the drive mechanism 3 in response to a control signal from the control circuit 13 to effect travelling the magnetic tape of the analog tape cassette 2a or the digital tape cassette 2b for reproducing, recording, fast-forwarding, rewinding and the like together with the drive mechanism 3. Numeral 9 is a signal processing portion responsive to control signals from the control circuit 13 for processing reproduced signals from the analog reproducing amplifier 5 and the digital reproducing amplifier6 and processing a signal to the digital recording amplifier 7 and to the analog recording amplifier 51. Numeral 10 is a switch circuit for outputting either of output of the analog reproducing amplifier 5 or an output of the digital reproducing amplifier 6 in response to a control signal from the control circuit 13. Numeral 11 is a digital signal processing circuit responsive to a control signal from the control circuit 13 for processing the digital signal from an digital signal inputterminal through an input/output interface circuit 18 or a digital signal obtained by A/D converting of an analog signal from an analog signal input terminal by an A/D circuit 19. The digital signal processing circuit 11 converts the digital signal thereto into a digital recording signal with a predetermined format, which is sent to the digital recording amplifier 7. The digital signal processing circuit 11 also receives a digital reproducing signal from the digital reproducing amplifier 6 through the switch circuit 10 and processes it to reproduce the recorded information which is sent to a digital signal output terminal through the input/output interface circuit 18 or to an analog signal output terminal through a D/Aconverter 20 in response to a control signal from the control circuit 13. Numeral 12 denotes an analog signal processing circuit responsive to a control signal from the control circuit 13 for processing the analog signal from the the switch circuit 10 and for processing the analog signal from the analog signal input terminal to produce an analog recording signal. The analog recording signal is sent to the analog recording amplifier 51. The switch circuit 10 responsive to a control signal from the control circuit 13 performs switching between transferring of the digital signal from the digital reproducing amplifier 6 to the digital signal processing circuit 11 and transferring of the analog signal from the analog reproducing amplifier 5 to the analog signal processing circuit 12.

A user gives commands to the control circuit 13 using an operation unit 14. The control circuit 13 sends an indication on the display 15 to display operational conditions or other information of the tape recorder. Numeral 16 is a tape cassette discrimination circuit for discriminating which type of the tape cassette is mounted, namely, an analog type of cassette 2a is mounted or a digital type of cassette 2b is mounted through a detection switch 16a. The detection switch 16a is open when an analog type tape cassette 2a is mounted because the analog type tape cassette 2a has a notch portion 16b as a marking means. On the other hand, a digital type tape cassette 2b has no notch portion there. Moreover, this discrimination of the tape cassette 2a from the tape cassette 2b may be performed by detection of difference in thickness of the tape cassette. That is, the analog type tape cassette 2a has a thin portion (not shown) where tape reals are contained. On the other hand, the digital type tape cassette 2b has no thin portion but full thickness over the surface.

In accordance with an output of the tape cassette discrimination circuit 16, either of an analog mode or a digital mode is executed by the control circuit 13. In the analog mode, the signal processing portion 9 processes the signal from the record/reproduce head 4 through the analog reproducing amplifier 5 or processes the analog signal from the analog signal input terminal to produce the analog recording signal. In the digital mode, the signal processing portion 9 processes the signal from the record/reproduce head 4 through the digital reproducing amplifier 6 or the digital signal from the input/output interface circuit 18 or the A/D converter 19. Numeral 17 is a muted portion detection circuit which is used in the analog reproducing mode. Atape cassette detection switch 52 detects presence of the analog and digital type tape cassettes 2a and 2b. Atape cassette detection circuit 53 produces a tape cassette detection signal sent to the control circuit 13 in response to an output of the tape cassette detection switch 52. Thus, the control circuit 13 detects the presence/absence of the analog and digital type tape cassettes 2a and 2b.

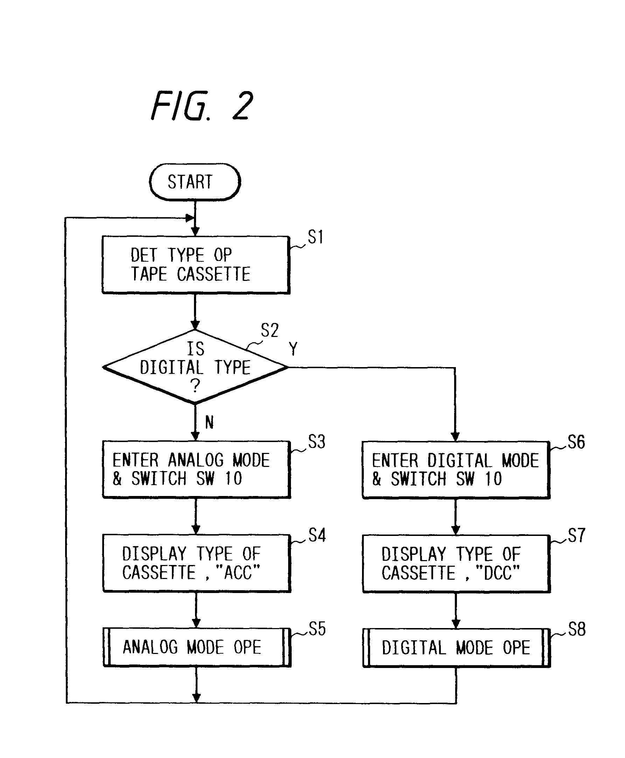

Hereinbelow will be described operation of this embodiment. Fig. 2 shows a flow chart of the operation of this embodiment, which executed by the microprocessor of the control circuit 13. Processing starts at a step s1. In the step s1, the control circuit 13 detects an output of the tape cassette discrimination circuit 16. In the following step s2, the control circuit 13 makes a decision as to whether an analog type tape cassette 2a or a digital type tape cassette 2b is mounted on the mounting device 1 by checking the output of the tape cassette discrimination circuit 16. If the mounted tape cassette is of an analog type tape cassette, processing proceeds to a step s3. In the step s3, processing enters an analog mode and the control circuit 13 causes the switch circuit 10 to transfer the output of the analog reproducing amplifier 5 to the analog signal processing circuit 12. In the following step s4, the control circuit 13 sends an indication "ACC" indicative of the analog mode to cause the display 15 to display the indication. Then, processing proceeds to a step s5 which is a subroutine. In the step s5, the control circuit 13 performs an analog mode operation. Then processing returns to the step s1.

In the step s2, the answer is NO, that is, a digital type tape cassette 2b is mounted, process proceeds to a step s6. In the step s6, processing enters a digital mode and the control circuit 13 causes the switch circuit 10 to transfer the output of the digital reproducing amplifier 6 to the digital signal processing circuit 11. In the following step s7, the control circuit 13 sends an indication "DCC" indicative of the digital mode to cause the display 15 to display the indication. Then, processing proceeds to a step s8 which is a subroutine. In the step s8, the control circuit 13 performs a digital mode operation. Then, processing returns to the step s1.

In the step s4 or s7, the operator knows that the tape recorder enters a standby condition of the analog or digital mode by the indication. That is, the appearance of indication "ACC" indicates that the tape recorder enters a standby condition of analog record and reproduce modes. On the other hand, the appearance of indication "DCC" indicates that the tape recorder enters a standby condition of digital record and reproduce modes.

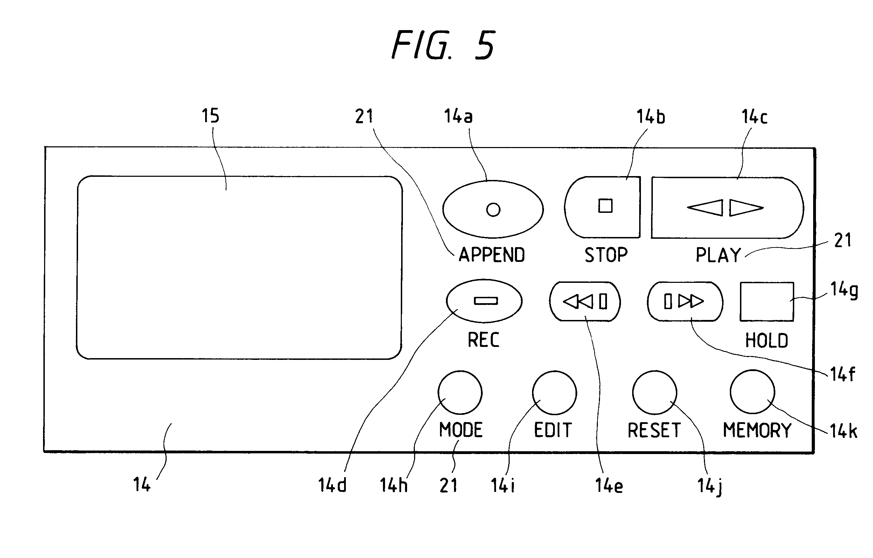

Then, operator can start giving commands with the operation unit 14. Fig. 5 is a plan view of this embodiment of the operation unit 14. The operator operates keys 14a to 14k to perform respective functions in accordance with the indication "ACC" or "DCC" or the like on the display 15. Each of keys 14a to 14k on the operation unit 14, has indication portions 21 adjacent to each of keys for indicating the operational function of the adjacent key. On the basis of the indication, a selected key 14a to 14k is operated by the operator.

As mentioned, processing enters either of analog or digital mode in accordance with the type of tape cassette detected by the switch 16a. The operator can operates keys 14 to 14k after recognition of indication of "ACC", i.e., analog mode or "DCC", i.e., digital mode. Therefore, the , keys 14a to 14k are commonly used to the analog mode and digital modes.

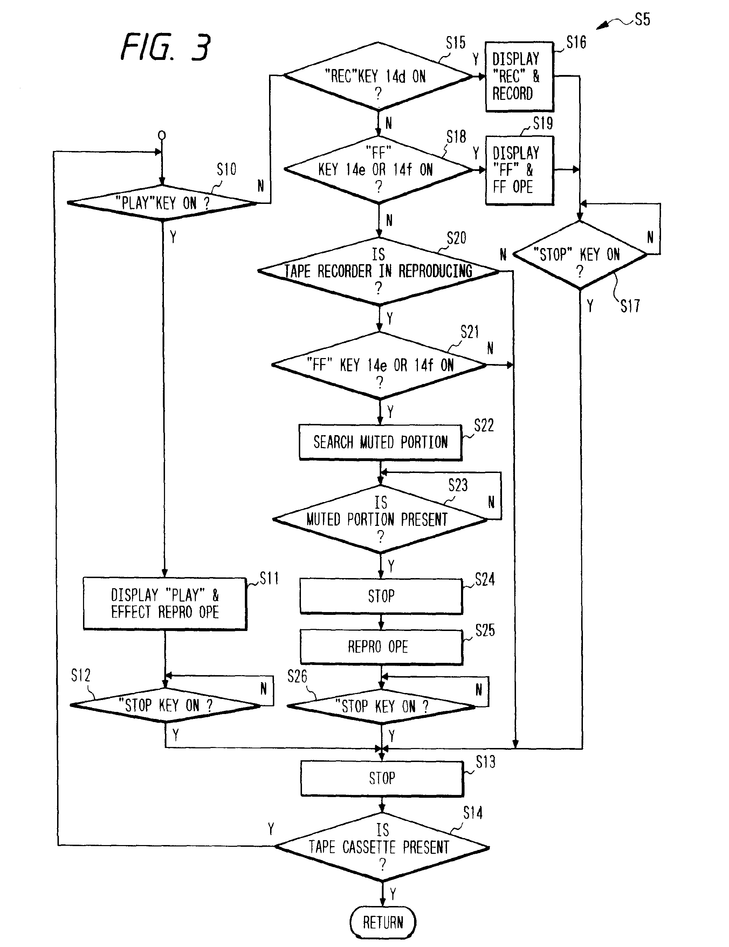

Fig. 3 shows a flow chart of this embodiment showing the subroutine of a step s5 of the analog mode. After indication of "ACC", the operator gives the tape recorder a command with the operation unit 14. The control circuit 13 controls the tape recorder in response to switches associated with respective keys of the operation unit 14. At first, in a step s10, a decision is made as to whether or not "PLAY" key 14c for reproducing is depressed. If the key 14c is depressed, the control circuit 13 displays "PLAY" on the display 15 an ordinary analog reproducing mode is executed to start reproducing in a step s11. That is, the control circuit 13 sends the control signal to the mechanism control circuit 8 to travel the magnetic tape. On the other hand, the analog reproducing head 4a reproduces an analog signal recorded on the tape of the analog tape cassette 2a. The reproduced analog signal is amplified by the analog reproducing amplifier 5 and sent to the analog signal processing circuit 12 by the switch circuit 10. In the following step s12, the control circuit 13 checks depression of "STOP" key 14b. If the "STOP" key 14b is depressed, the tape recorder moves to "stop" condition by producing the control signal to the mechanism control circuit 8 in the following step s13. The control circuit 13 makes a decision in the following step s14 as to whether the mounted tape cassette is present by checking the tape cassette detection signal from the tape cassette detection circuit 53. If the mounted analog tape cassette 2a is still present, processing returns to the step s10. If the mounted analog tape cassette 2a is absent, processing returns to the step s1 shown in Fig. 2.

In the step s10, if the answer is NO. That is, "PLAY" key is not depressed, processing proceeds to a step s15. In the step s15, the control circuit 13 makes a decision as to whether or not a "REC" key 14d is depressed. If the "REC" key 14d is depressed, processing proceeds to a step s16. In the step s16, the control circuit 13 makes an indication "REC" on the display 15 and a well-known analog recording operation is executed to start recording. That is, the control circuit 13 sends the control signal to the mechanism control circuit 8 to travel the magnetic tape. On the other hand, the analog recording head 4d records the analog record signal from the analog recording amplifier 51 on the tape of the analog tape cassette 2a. More specifically, the analog signal from the analog signal input terminal is processed by the analog signal processing circuit 12 and processed analog input signal is amplified by the analog recording amplifier 51 to operate the analog recording head 4d. In the following step s17, the control circuit 13 checks depression of "STOP" key 14b. If the "STOP" key 14b is depressed, the tape recorder moves to "stop" condition by producing the control signal to the mechanism control circuit 8 in the following step s13. The control circuit 13 makes a decision in the following step s14 as to whether the mounted tape cassette is present. If the mounted analog tape cassette 2a is still present, processing returns to the step s10. If the mounted analog tape cassette 2a is absent, processing returns to the step s1 shown in Fig. 2.

In the step s15, if the answer is NO, namely, the "REC" key 14d is no depressed, processing proceeds to a step s18. In the step s18, the control circuit 13 makes a decision as to whether or not "FF" key 14e or 14f is depressed. If the the "FF" key 14e or 14f is depressed, the control circuit 13 makes an indication "FF" on the display 15 and executes a well-known fast-forwarding operation in a step s19. That is, the control circuit 13 sends the control signal to the mechanism control circuit 8 to travel the magnetic tape fast. In the following step s17, the STOP 14b is depressed the tape recorder enters "stop" condition. In a step s18, if the "FF" key 14e or 14f is not depressed, the condition of the tape recorder is confirmed as to whether or not the tape recorder is in the reproducing mode in a step s20. If the tape recorder is not in the reproducing mode, processing proceeds to step s13. The tape recorder moves to "stop" condition by producing the control signal to the mechanism control circuit 8 in the following step s13. The control circuit 13 makes a decision in the following step s14 as to whether the mounted tape cassette is present. If the mounted analog tape cassette 2a is still present, processing returns to the step s10. If the mounted analog tape cassette 2a is absent, processing returns to the step s1 shown in Fig. 2.

In the step s20, if the answer is YES, namely, if the tape recorder is in the reproducing mode, processing proceeds to step s21. In the step s21, the control circuit 13 makes a decision as to whether or not "FF" key 14e or 14f is depressed. If the the fast-forwarding key 14e or 14f is depressed, because this condition means a search mode, the control circuit 13 searches a muted portion on the analog tape after indication of "SEARCH". That is, the control circuit 13 travels the magnetic tape using the mechanism control circuit 13 and reproduces the analog type tape in a step 22. Then, the control circuit 13 positions the magnetic tape at the beginning position of a recorded program in response to an output of the muted portion detection circuit 17. That is, in the step s23 an s24, when a muted portion is detected, the fast-forwarding reproducing operation are stopped. In the following step s25, reproducing operation is effected again to reproduce the search program. In the following step s26, the control circuit 13 checks depression of "STOP" key 14b. If the "STOP" key 14b is depressed, the tape recorder moves to "stop" condition by producing the control signal to the mechanism control circuit 8 in the following step s13. The control circuit 13 makes a decision in the following step s14 as to whether the mounted tape cassette is present. If the mounted analog tape cassette 2a is still present, processing returns to the step s10. If the mounted analog tape cassette 2a is absent, processing returns to the step s1 shown in Fig. 2.

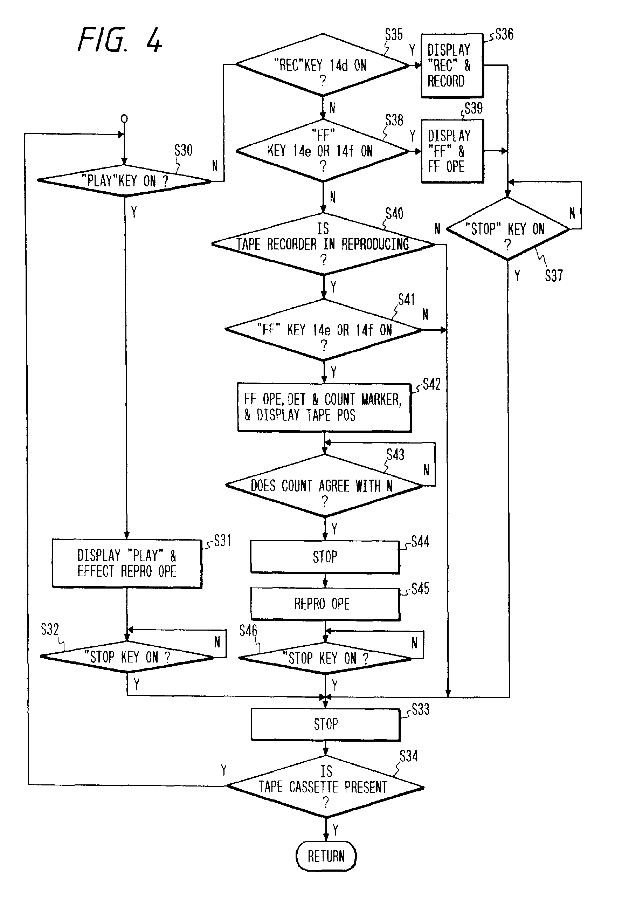

On the other hand, in the case that a digital tape cassette is detected in the step s2 shown in Fig. 2. After indication "DCC" in a step s7, the operator gives the tape recorder a command with the operation unit 14. The control circuit 13 performs controlling in response to the condition of respective keys of the operation unit 14. Fig 4 shows a flow chart of a subroutine of the step s8 in the digital mode.

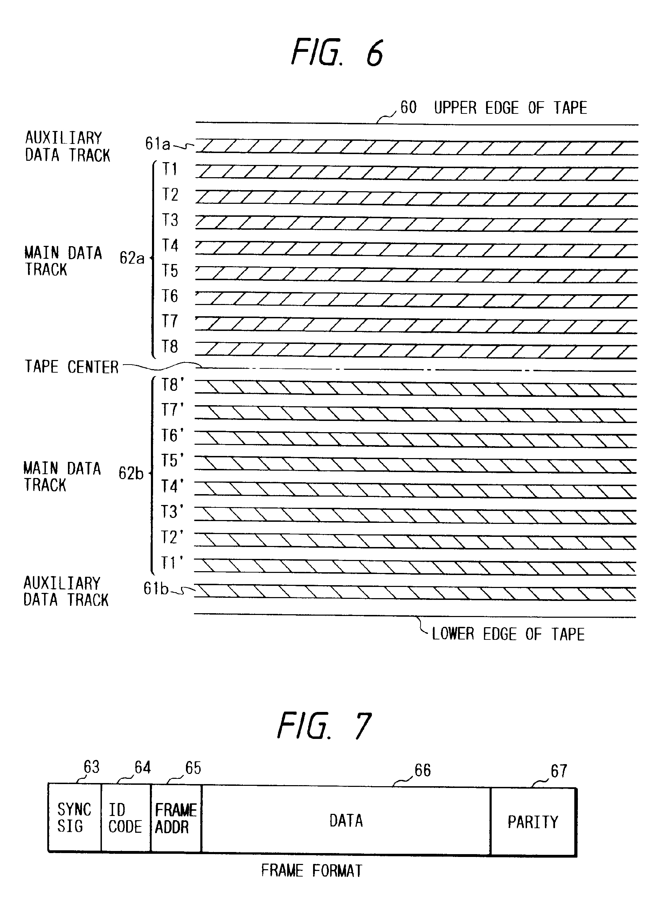

Information recorded on a tape of a digital type tape cassette 2b is read out by the signal processing portion 9. Fig. 6 shows a track format of this embodiment, showing a recording pattern of the digital signal recorded on the magnetic tape of the digital tape cassette 2b. There are upper and lower sectors which are divided by a tape center. Each of sector comprises a plurality of data tracks, i.e., main data track 62a or 62b and an auxiliary track 61a or 61 b. The auxiliary track 61a or 61b is provided these plurality of data tracks near the upper edge of the tape. The digital signal is recorded on the main tracks 62a at the same time. The auxiliary track 61a or 61 b records track numbers which is defined in accordance with the tape travelling position and is differentfrom the main data tracks 62a and 62b mentioned above, index numbers, time codes, a list of recorded programs, and markers used for indicating an interval between two consecutive recorded programs with auxiliary codes. Fig. 7 shows a frame format of this embodiment. In Fig. 7, a synchronizing signal 63 having a specified data pattern, an ID code 64, a frame address 65, data 66, parity data 67 are recorded in order of mention, sothatfunc- tional search is obtained.

As mentioned, in the magnetic tape of the digital type tape cassette 2b, information which cannot be recorded on the magnetic tape of the analog type tape cassette 2a, so that the digital signal processing circuit 11 detects the information and sends it to the control circuit 13. The tape recorder reproduces the recorded data as well as indicates the track number on the display recorded on the auxiliary track 61a or 61 b.

Hereinbelow will be described operation of the subroutine s8 of digital mode operation. Fig. 4 shows the subroutine of the step s8 shown in Fig. 2, of the digital mode. In response to indication of "DCC" made in the step s7, the operator gives the tape recorder command with the operation unit 14. The control circuit 13 controls the tape recorder in response to switches associated with respective keys of the operation means 14. At first in a step s30, a decision is made as to whether or not "PLAY" key 14c for reproducing is depressed. If the key 14c is depressed, the control circuit 13 makes an indication "PLAY" and executes a digital reproducing operation in a step s31. That is, the digital reproducing head 4c reproduces a digital signal recorded on the tape of the digital type tape cassette 2b. The reproduced digital signal is amplified by the digital reproducing amplifier 6 and sent to the digital signal processing circuit 11 by the switch circuit 10. In the following step s32, the control circuit 13 checks depression of "STOP" key 14b. If the "STOP" key 14b is depressed, the tape recorder moves to the stop condition by producing the control signal to the mechanism control circuit 8 in the following step s33. The control circuit 13 makes a decision in the following step s34 as to whether the mounted tape cassette is present. If the mounted digital tape cassette 2b is still present, processing returns to the step s30. If the mounted digital type tape cassette 2b is absent, processing returns to the step s1 shown in Fig. 2.

In the step s30, if the answer is NO. That is, "PLAY" key is not depressed, processing proceeds to a step s35. In the step s35, the control circuit 13 makes a decision as to whether or not a "REC" key 14d is depressed. If the "REC" key 14d is depressed, processing proceeds to a step s36. In the step s36, the control circuit 13 makes the indication "REC" and executes an ordinary digital recording function. That is, the digital recording head 4c records the digital record signal from the digital recording amplifier 7 on the tape of the digital type tape cassette 2b. That is, the digital signal from the digital signal input terminal orA/D-converted analog input signal is processed by the digital signal processing circuit 11 and processed digital input signal is amplified by the digital recording amplifier 7 to operate the digital recording head 4c. In the following step s37, the control circuit 13 checks depression of "STOP" key 14b. If the "STOP" key 14b is depressed, the tape recorder moves to "stop" condition by producing the control signal to the mechanism control circuit 8 in the following step s33. The control circuit 13 makes a decision in the following step s34 as to whether the mounted tape cassette is present. If the mounted digital tape cassette 2a is still present, processing returns to the step s30. If the mounted digital type tape cassette 2b is absent, processing returns to the step s1 shown in Fig. 2.

In the step s35, if the answer is NO, namely, the "REC" key 14d is not depressed, processing proceed to a step s38. In the step s38, the control circuit 13 makes a decision as to whether or not "FF" key 14e or 14f is depressed. If the the fast-forwarding key 14e or 14f is depressed, the control circuit 13 makes the indication "FF" and executes a fast-forwarding operation in a step s39. In the following step s37, the STOP 14b is depressed the tape recorder enters "stop" condition. In a step s38, if the "FF" key 14e or 14f is not depressed, the condition of the tape recorder is confirmed as to whether or not the tape recorder is in the reproducing in a step s40. If the tape recorder is not in the reproduction, processing proceeds to step s33. The tape recorder moves to "stop" condition by producing the control signal to the mechanism control circuit 8 in the following step s33. The control circuit 13 makes a decision in the following step s34 as to whether the mounted tape cassette is present. If the mounted digital type tape cassette 2a is still present, processing returns to the step s30. If the mounted digital type tape cassette 2b is absent, processing returns to the step s1 shown in Fig. 2.

In the step s40, if the answer is YES, namely, if the tape recorder is in the reproducing mode, processing proceeds to step s41. In the step s41, the control circuit 13 makes a decision as to whether or not "FF" key 14e or 14f is depressed. If the the "FF" 14e or 14f is depressed, the control circuit 13 starts search operation. That is, inn the following step s42, the control circuit 13 effects the fast-forwarding operation and detects counts a maker signal from the digital signal processing circuit 11. The digital signal processing circuit 11 detects a marker recorded in the auxiliary track 61a or 61 and produces the maker signal sent to the control circuit 13. In the following step s43, the control circuit 13 makes a decision as to whether or not the count agrees with a predetermined value N, the control circuit 13 effects the stop operation. Then, in the following step s45, the reproducing operation is effected. In the following step s46, the control circuit 13 checks depression of "STOP" key 14b. If the "STOP" key 14b is depressed, the tape recorder moves to "stop" condition by producing the control signal to the mechanism control circuit 8 in the following step s33. The control circuit 13 makes a decision in the following step s34 as to whether the mounted tape cassette is present. If the mounted digital tape cassette 2b is still present, processing returns to the step s30. If the mounted analog tape cassette 2b is absent, processing returns to the step s1 shown in Fig. 2.

During fast-forwarding in step s42, the control circuit 13 indicates the track number on the display 15. In response to detection of the maker the control circuit 13 increases the indication of the track number by one, so that the user can always recognizes the position of the tape of the digital tape cassette fast- forwarded.

As mentioned keys on the operation unit 14 can be used commonly between the analog and digital modes. In this embodiment, the "PLAY" key 14c, "STOP" key 14b, "FF" key 14e and 14f are used commonly. However, other combination of keys can be considered. Moreover, the indication by the display 15 can be changed in accordance with the analog mode and the digital mode. For example, in the digital mode indicated by "DCC", because tape position signals, i.e., the synchronizing signal, the frame address, and the markers indicative of an interval between two consecutive recorded programs, are included on the tape with the frame format of DCC as shown in Fig. 7, the current head position can be indicated in the fast-forwarding conviction and a desired position is searched in the fast-forwarding condition. Therefore, indication such as "position number" indicative of the position of the head is considered. In addition, serviceability in operation can be improved by changing indication between the analog and digital modes in the fast-forwarding during reproducing if functions are different therebetween.

As mentioned, serviceability can be further improved by automatically changing indication portion 21 because operation keys 14a to 14k of the operation unit 14 are used commonly. Moreover, though the serviceablity in operatin is relatively low these indication can be indicated on the display 15.

As clearly understood from the description mentioned above, the tape recorder of this invention, comprises tape cassette discrimination circuit 16 for discrimination between the analog tape cassette 2a and the digital tape cassette 2b; the switch circuit 10 for outputting either of the output of the digital reproducing amplifier 6 or the output of the analog reproducing amplifier 5 automatically in accordance with the tape cassette discrimination signal. Thus, keys 14a to 14k are commonly used between the analog and digital mode in response to the type of the tape cassette 2a or 2b.

## Claims

1. A tape recorder for recording/reproducing a signal comprising:
(a) mounting means (1) for mounting any one of the plurality of types of tape cassette, each one of said plurality of types of tape cassettes being to be recorded/reproduced under different technical conditions and having marking means to be discriminated from each other;
(b) drive means (3) for driving the magnetic tape of a mounted tape cassette;
(c) recording/reproducing means (4) for recording/reproducing said signal on or from the magnetic tape of a mounted tape cassette;
(d) discriminating means (16) for producing a discrimination signal in response to said marking means;
(e) common operation means (14), for use with a plurality of types of mounted cassette,for producing command signals in response to operation by an operator; and
(f) control means (13) responsive to said command signals and said discrimination signal for causing said drive mans (3) and recording/reproducing means (4) to record/reproduce said signal on or from said magnetic tape in a condition dependent upon the type of cassette mounted in said mounting means (1).

2. A tape recorder according to claim 1, wherein said operation means (14) comprises fast movement operation means (14e, 14f) for producing a fast-forwarding and/or a fast-reversing command signal and said control means (13) causes said drive means to drive a mounted magnetic tape so as to effect a fast movement operation.

3. A tape recorder according to claim 1 or 2 further comprising indication means (15), wherein said control means (13) causes said indication means (15) to indicate information indicative of a tape mounted on maid mounting means (11) and/or predetermined information in response to command signals.

4. A tape recorder according to claims 2 and 3 wherein said control means (13) causes said indication means (15) to indicate a piece of information selected from a plurality of pieces of predetermined information in accordance with a command signal and said fast movement command signal.

5. A tape recorder according to any preceding claims, wherein said control means (13) causes said recording/reproducing means (4) to record/reproduce said signal with an analog form in a first condition, for a first type of tape cassette.

6. A tape recording according to any one of claims 1 to 4, wherein said control means (13) causes said recording/reproducing means (4) to record/reproduce said signal with a digital form on a plurality of tracks on a magnetic tape in a second condition for a second type of tape cassette, a marking signal being recorded on at least one of said tracks.

7. A tape recorder according to claim 6 further comprising a marker signal detection means (11) responsive to said recording/reproducing means (14) for detecting a marker signal recorded on a mounted magnetic tape to produce and send a marker detection signal to said control means (13), said control means (13) causing said recording/reproducing means (4) and said drive means (3) to reproduce said magnetic tape and stop said drive means (3) in response to a specific position detection signal.

8. A tape recorder according to claim 7 wherein said specific position detection signal is dependant upon the count of said marker detection signals sent to said control means.

9. Atape recorder according to any preceding claim, further comprising a mute portion detection means (17) responsive to said recording/reproducing means (4) for detecting a mute portion on a mounted magnetic tape to produce and send a mute detection signal to said control means (13) and wherein said control means (13) causes said recording/reproducing means (4) and said drive means (3) to reproduce said magnetic tape and then causes said drive means (3) to stop in response to said mute detection signal.

10. A tape recorder according to claim 7, 8 or 9 wherein said control means causes reproduction of a mounted tape in a fast-movement mode until production of a specific position detection signal or a mute detection signal.
